(19) Europäisches Patentamt / European Patent Office / Office européen des brevets

(11) **EP 2 050 642 A2**

(12) **EUROPEAN PATENT APPLICATION**

(43) Date of publication:
**22.04.2009 Bulletin 2009/17**

(51) Int Cl.:
***B60W 30/02*** *(2006.01)*          ***B60W 20/00*** *(2006.01)*

(21) Application number: **08018008.6**

(22) Date of filing: **14.10.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventors:<br>• **Moriki, Hidekazu**<br>  **6-1, Marunouchi 1-chome,**<br>  **Chiyoda-ku,**<br>  **Tokyo 100-8220 (JP)**<br>• **Yamakado, Makoto**<br>  **6-1, Marunouchi 1-chome,**<br>  **Chiyoda-ku,**<br>  **Tokyo 100-8220 (JP)** |
| (30) Priority: **16.10.2007  JP 2007268499**<br>**12.09.2008  JP 2008234158** | |
| (71) Applicant: **Hitachi Ltd.**<br>**Chiyoda-ku**<br>**Tokyo 100-8280 (JP)** | (74) Representative: **Matias, Bruno M.**<br>**Beetz & Partner**<br>**Patentanwälte**<br>**Steinsdorfstrasse 10**<br>**80538 München (DE)** |

(54) **Braking/driving control apparatus and vehicle having the apparatus**

(57)    A braking/driving control apparatus includes: a lateral acceleration acquisition unit that acquires a lateral acceleration of a vehicle; and a longitudinal acceleration acquisition unit that acquires a longitudinal acceleration of the vehicle, and the longitudinal acceleration control unit controls a braking/driving force of the vehicle so that the longitudinal acceleration of the vehicle is decreased when the absolute value of the lateral acceleration of the vehicle that has been acquired tends to increase, and so that the longitudinal acceleration of the vehicle is increased when the absolute value of the lateral acceleration of the vehicle that has been acquired tends to decrease.

FIG.1

**Description**

The disclosures of the following priority applications are herein incorporated by reference: Japanese Patent Application No. 2007-268499 filed October 16, 2007; and Japanese Patent Application No. 2008-234158 filed September 12, 2008.

The present invention relates to a braking/driving control apparatus that controls the longitudinal motion of a vehicle.

As a prior art technology, in Japanese Laid-Open Patent Publication H07-125565, there is disclosed an automated cruise control device that takes as its objective to make it possible to go around a corner at an appropriate vehicle speed while continuing automated cruising, and that comprises: a navigation device that outputs a road map and the position of the subject vehicle upon that map; a vehicle speed setting means for inputting a set vehicle speed; a vehicle speed control device that, along with causing the vehicle to travel at a constant speed on the basis of that set vehicle speed, also calculates a target vehicle speed for going around a corner that is present in front of the subject vehicle on the basis of the output of the navigation device, and decides whether or not it is possible to go around that corner by comparing this target vehicle speed and the current vehicle speed; and a vehicle speed adjustment means that adjusts the current vehicle speed on the basis of the output of the vehicle speed control device.

However, with this control means disclosed in Japanese Laid-Open Patent Publication H07-125565, not sufficient consideration has necessarily been paid to the question of entering the corner while decelerating and coming out of the corner while accelerating, i.e. of controlling the motion of the vehicle in the longitudinal direction in coordination with the motion of the vehicle in the lateral direction. In other words, since deceleration has been performed before the corner and acceleration has been performed after coming out of the corner, there has been the problem that the section over which the vehicle speed is decreased has become undesirably wide more than necessary, and accordingly the driver experiences the feeling that the vehicle speed is insufficient. Moreover the problem of deterioration of the fuel consumption has also arisen, since deceleration with the brakes and acceleration with the engine have both been performed each while going around a corner.

According to the 1st aspect of the present invention, a braking/driving control apparatus, comprises: a lateral acceleration acquisition unit that acquires a lateral acceleration of a vehicle; and a longitudinal acceleration acquisition unit that acquires a longitudinal acceleration of the vehicle, and the longitudinal acceleration control unit controls a braking/driving force of the vehicle so that the longitudinal acceleration of the vehicle is decreased when the absolute value of the lateral acceleration of the vehicle that has been acquired tends to increase, and so that the longitudinal acceleration of the vehicle is increased when the absolute value of the lateral acceleration of the vehicle that has been acquired tends to decrease.

According to the 2nd aspect of the present invention, in the braking/driving control apparatus according to the 1st aspect, it is preferred that the braking/driving control apparatus further comprises: an electric motor that drives at least one wheel of the vehicle; an electrical power supply unit that supplies electrical power to the electric motor; and an electric storage device that is capable of accumulating the electrical power, and the longitudinal acceleration control unit causes the electric motor to perform power running or regenerative braking, so as to increase or decrease the longitudinal acceleration of the vehicle.

According to the 3rd aspect of the present invention, in the braking/driving control apparatus according to the 2nd aspect, it is preferred that: the braking/driving control apparatus further comprises a friction braking device that applies frictional torque to at least one wheel of the vehicle; and power running of the electric motor is stopped when the friction braking device is applying frictional torque.

According to the 4th aspect of the present invention, in the braking/driving control apparatus according to the 1st aspect, it is preferred that the braking/driving control apparatus further comprises: a steering angle acquisition unit that acquires steering angle information of the vehicle; a yaw rate acquisition unit that acquires a yaw rate of the vehicle; and a spin bias value calculation unit that calculates a spin bias value for the vehicle from the lateral acceleration, the steering angle information and the yaw rate, and the longitudinal acceleration control unit maintains or increases the longitudinal acceleration of the vehicle, if the spin bias value for the vehicle is between two threshold values tr_spON and tr_VDC_ON that are set in advance, and the absolute value of the lateral acceleration of the vehicle tends to increase.

According to the 5th aspect of the present invention, in the braking/driving control apparatus according to the 1st aspect, it is preferred that the longitudinal acceleration control unit does not perform control to increase or decrease the longitudinal acceleration of the vehicle when deciding that lateral acceleration is not acting upon the vehicle based upon the lateral acceleration that has been acquired.

According to the 6th aspect of the present invention, in the braking/driving control apparatus according to the 1st aspect, it is preferred that the longitudinal acceleration control unit starts to decelerate the vehicle when having decided that cornering of the vehicle has started based upon the lateral acceleration that has been acquired.

According to the 7th aspect of the present invention, a vehicle comprises a braking/driving control apparatus according to the 1st through 7th aspects.

BRIEF DESCRIPTION OF THE DRAWINGS

Fig. 1 shows an example of a vehicle structure for implementation of a preferred embodiment of the present invention;
Fig. 2 is a figure showing signals transferred between controllers;
Fig. 3 is a figure showing the control structure of a central controller 100;
Fig. 4 is a flow chart showing control performed by a braking/driving control unit;
Fig. 5 is a flow chart of an intervention decision;
Fig. 6 is a flow chart of correction acceleration calculation processing;
Fig. 7 is a flow chart of correction torque calculation processing;
Fig. 8 is a figure showing an example of travel around a course;
Fig. 9 is a figure showing an example of cornering of a vehicle to which the automated cruise control device of Japanese Laid-Open Patent Publication H07-125565 has been applied;
Fig. 10 is a figure showing an example of cornering of a vehicle to which the present invention has been applied; and
Fig. 11 is a figure showing an example of decelerating cornering of this vehicle to which the present invention has been applied.

DESCRIPTION OF THE PREFERRED EMBODIMENT

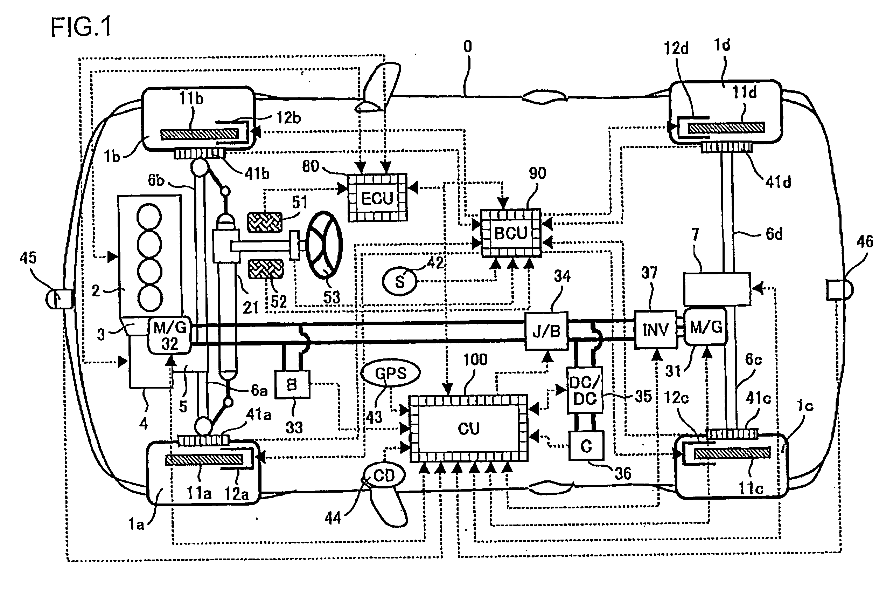

In the following, an embodiment of the present invention will be described. Fig. 1 shows and example of the vehicle structure of this embodiment.

<Driving>

A vehicle 1 is a so called hybrid four wheel drive vehicle, and drives a left front wheel 1a and a right front wheel 1b with an engine 2 while driving a left rear wheel 1c and a right rear wheel 1d with a rear motor 31. The engine 2 is connected to a transmission 4 via a torque converter 3, and further is connected to the front wheels 1a and 1b via a front differential gear 5 and front wheel axles 6a and 6b. Moreover, the rear motor 31 is connected to the rear wheels 1c and 1d via a rear differential gear 7 and rear wheel axles 6c and 6d. The driver is able to accelerate this vehicle 0 by actuating an accelerator pedal 51.

<Braking>

Friction brakes that comprise brake rotors 11a, 11b, 11c and 11d and respective calipers 12a, 12b, 12c and 12d are provided to the vehicle wheels 1a, 11b, 1c and 1d respectively, and it is possible to apply friction brake torques to the vehicle wheels by pressing brake pads not shown in the figures against the abovementioned rotors with the abovementioned calipers. It would be acceptable for the calipers 12a, 12b, 12c and 12d to be hydraulically operated, or they could also be electrical type calipers that include electric motors. Thus the vehicle 0 may be decelerated by the driver actuating a brake pedal 52.

<Steering>

A steering wheel 53 is connected to the front wheels 1a and 1b via a power steering unit 21, and, by the driver turning this steering wheel 53, the steering angles of the front wheels 1a and 1b may be adjusted, and thereby the direction of progression of the vehicle 0 may be controlled. It is desirable for the power steering unit 21 to be of an electrical type that includes an electric motor. Moreover, it would also be acceptable for the steering wheel 53 and the front wheels 1a and 1b not to be physically connected together, but to be linked by a so called steer-by-wire system.

<Electrical power>

A front motor 32 is also connected to the engine 2 via a belt or a planetary gear mechanism or the like not shown in the figures. This front motor 32 is normally used as a generator, and the electrical power that is generated by the front motor 32 is accumulated in a battery 33, as well as being consumed by an air conditioner, an illumination system, and the like, not shown in the figures. The electrical power that is generated by the front motor 32 is also accumulated in a capacitor 36 via a junction box 34 and a DC/DC converter 35. The electrical power that has been accumulated in the capacitor 36 is supplied to the rear motor 31 via the DC/DC converter 35 and an inverter 37.

<Sensors etc.>

Wheel speed sensors 41a, 41b, 41c and 41d are fitted to the vehicle wheels 1a, 1b, 1c and 1d respectively, and these sensors acquire the rotational speeds of their respective vehicle wheels. A combined sensor 42 is installed in the vicinity of the center of gravity of the vehicle 0, and acquires the longitudinal acceleration, the lateral acceleration, and the yaw rate of the vehicle body 1. Moreover, a GPS (Global Positioning System) 43 is fitted to the vehicle 0, and acquires positional information for the vehicle 0. The vehicle 0 is also provided with a communication unit 44, and acquires information such as map information, traffic information, weather information and so on from a network. Furthermore, millimeter wave radars 45 and 46 are respectively installed at the front and the rear of the vehicle 0, and detect forward and rearward vehicles and obstructions, thereby acquiring forward and rearward sensor information. However, this forward and rearward sensor information acquisition means is not limited to being millimeter wave radar; it could also be laser radar, stereo cameras, or the like.

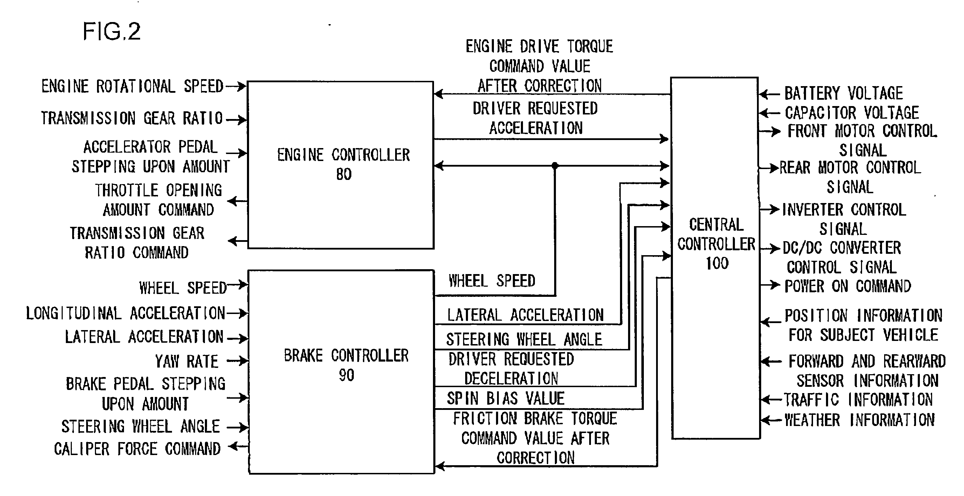

Fig. 2 shows input and output signals to an engine controller 80, a brake controller 90, and a central controller 100.

<The controllers>

The vehicle 0 comprises an engine controller 80, a brake controller 90, and a central controller 100. Certain signals that are transferred between these controllers are shown in Fig. 2.

From the engine rotational speed, the transmission gear ratio, the accelerator pedal stepping on amount, and the wheel speeds, the engine controller 80 calculates a driver requested drive force and transmits it to the central controller 100; and this controller 80 also controls the throttle opening amount of the engine 2 and the transmission gear ratio that is selected by the transmission 5, according to an engine drive torque command value after correction that is transmitted from the central controller 100, and according to the wheel speeds.

From the amount by which the brake pedal is stepped upon, the brake controller 90 calculates a driver requested deceleration and transmits it to the central controller 100; and this controller 90 also adjusts the brake torques that are generated at each of the vehicle wheels, by controlling the thrusts of the calipers, according to friction brake torque command values after correction that are transmitted from the central controller 100. Moreover, the brake controller 90 acts as a controller for a per se known skidding prevention device (electronic stability control device), and calculates a spin bias value (a spin possibility value) r_sp for the vehicle from the wheel speeds, the longitudinal acceleration, the lateral acceleration, the yaw rate, and the steering wheel angle. When this spin bias value r_sp exceeds a threshold value tr_VDC_ON that is set in advance, then the controller 90 raises an skidding prevention control flag f_VDC_ON, and controls the caliper force at each of the vehicle wheels so as to suppress skidding of the vehicle. Here, the spin bias value r_sp is an indicator of the tendency of the vehicle to spin, and may be, for example, the absolute value of the amount of deviation between a model yaw rate that is calculated from the steering wheel angle and the vehicle speed, and the actual yaw rate.

Principally, the central controller 100 controls the torque of the rear motor, according to the state of motion of the vehicle and so on. The details of the control performed by the central controller 100 will be described hereinafter.

Variations in the numbers and/or the arrangement of the motors, inverter and battery, capacitor and controllers, and so on, have no particularly close relationship with the present invention; the present invention may be applied to any vehicle having a structure in which the vehicle wheels are driven and the drive force thereof can be controlled by an electric motor. Control technique

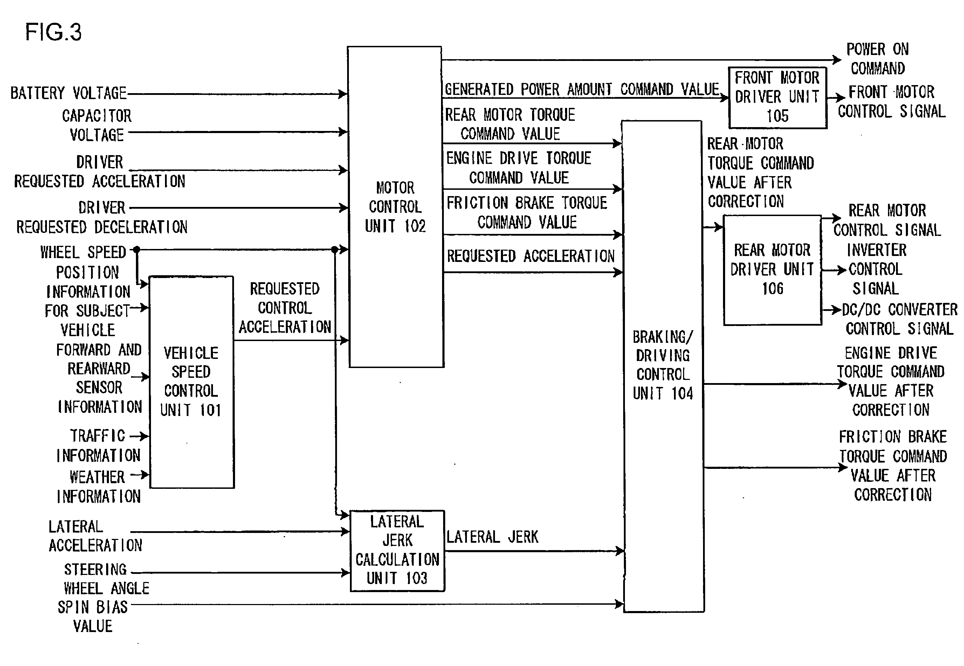

Fig. 3 shows the control structure of the central controller 100. This central controller 300 comprises a vehicle speed control unit 101, a motor control unit 102, a lateral jerk calculation unit 103, a braking/driving control unit 104, a front motor driver unit 105, and a rear motor driver unit 106.

The vehicle speed control unit 101 estimates the speed of the subject vehicle from the wheel speeds and the positional information of the subject vehicle, performs cruise control of the type described in Japanese Laid-Open Patent Publication H07-125565 using the positional information of the subject vehicle, the forward and rearward sensor information, traffic information, weather information and the like, and also using internally stored map data, and outputs a requested control acceleration $G_{x\_c}$.

The motor control unit 102 takes at least one of the above described driver requested acceleration $G_{xa\_dr}$, driver requested deceleration $G_{xb\_dr}$, and requested control acceleration $G_{x\_c}$ as being a requested acceleration $G_{x\_t}$. For example, a switch for cruise control may be provided, and, if cruise control is ON, then the requested control acceleration $G_{x\_c}$ may be taken as being the requested acceleration $G_{x\_t}$; whereas, if cruise control is OFF, then the total of the driver requested acceleration $G_{xa\_dr}$ and the driver requested deceleration $G_{xb\_dr}$ may be taken as being the requested acceleration $G_{x\_t}$. And, from the wheel speeds and the requested acceleration $G_{x\_t}$, using maps or the like that are set in advance, the motor control unit 102 outputs a rear motor torque command value $T_{mr\_t}$ (a negative value, in other words a value that also includes regeneration torque), and outputs an engine drive torque command value and friction brake command values so as to achieve the requested acceleration $G_{x\_t}$. Furthermore, slippage of the front wheels 1a and 1b is detected by comparing together the front wheel speeds and the rear wheel speeds, and the rear motor torque command value $T_{mr\_t}$ is increased according to the magnitude of this front wheel slippage.

Moreover, if the capacitor voltage Vc is less than or equal to a threshold value tVcminOFF that is set in advance, then the motor control unit 102 gradually stops driving of the rear motor 31, and thereafter outputs a power on command so as to put the junction box 34 in its state to transmit electrical power, and increases a generated power amount command value, whereby electrical power is supplied from the battery 33 and the front motor 32 via the DC/DC converter 35 to the capacitor 36; and powered running by the rear motor 31 is not performed until the capacitor voltage Vc becomes greater than or equal to a threshold value tVcminON that is set in advance: Furthermore, if the capacitor voltage Vc is greater than or equal to a threshold value tVcmaxOFF that is set in advance, then the regeneration amount of the rear motor 31 is gradually brought to 0; and regeneration by the rear motor 31 is not performed until the capacitor voltage Vc becomes less than or equal to a threshold value tVcmaxON that is set in advance.

The lateral acceleration $G_y$ of the vehicle is differentiated by the lateral jerk calculation unit 103 using the following Equation (1), so as to obtain a lateral jerk $G_{y\_d}$:

$$G_{y\_d}(s) = \frac{\omega_n^2 s}{s^2 + 2\zeta\omega_n s + \omega_n^2} G_y(s) \qquad \cdots(1)$$

Here, $\omega_n$ and $\zeta$ are adjusted in advance so that the value that is obtained by differentiating $G_y$ off line and $G_{y\_d}$ approximately agree with one another.

Or, it would also be acceptable to calculate the lateral jerk $G_{y\_d}$ using the following Equation (2), from the vehicle body speed that is estimated from the wheel speeds, and from the steering wheel angle $\delta_h$:

$$G_{y\_d}(s) = \frac{2IK_f Vs^3 + 4K_f K_r l l_r s^2 + 4K_f K_r l Vs}{mIVs^2 + \left[2m(l_f^2 K_f + l_r^2 K_r) + 2I(K_f + K_r)\right]s + \left[\frac{4K_f K_r l^2}{V} - 2mV(l_f K_f - l_r K_r)\right]} \frac{\delta_h(s)}{n} \qquad \cdots(2)$$

Here m is the vehicle weight, I is the inertia moment of the vehicle in cornering direction, 1 is the wheel base, $l_f$ is the distance from the front axle to the center of gravity of the vehicle, $l_r$ is the distance from the rear axle to the center of gravity of the vehicle, $K_f$ is the front wheel cornering power, and $K_r$ is the rear wheel cornering power; these are obtained in advance by experiment or the like.

The braking/driving control unit 104 corrects the rear motor torque command value $T_{mr\_t}$ according to the lateral jerk $G_{y\_d}$, and outputs a rear motor torque command value after correction $T_{mr\_r}$. The details of the braking/driving control performed by the braking/driving control unit 104 will be described hereinafter.

According to the generated power amount command value, the front motor driver unit 105 outputs a front motor control signal and thereby adjusts the amount of electricity generated.

According to the rear motor torque command value, the rear motor driver unit 106 outputs a rear motor control signal, an inverter control signal, and a DC/DC converter control signal, and thereby adjusts the torque of the rear motor 31.

<Control performed by the braking/driving control unit>

The braking/driving control unit 104 outputs the value that is obtained by adding a motor torque correction value $dT_{mr\_r}$ to the rear motor torque command value $T_{mr\_t}$, as the rear motor torque command value after correction $T_{mr\_r}$. The method by which this rear motor torque command value after correction $T_{mr\_r}$ is calculated will be explained subsequently using a flow chart.

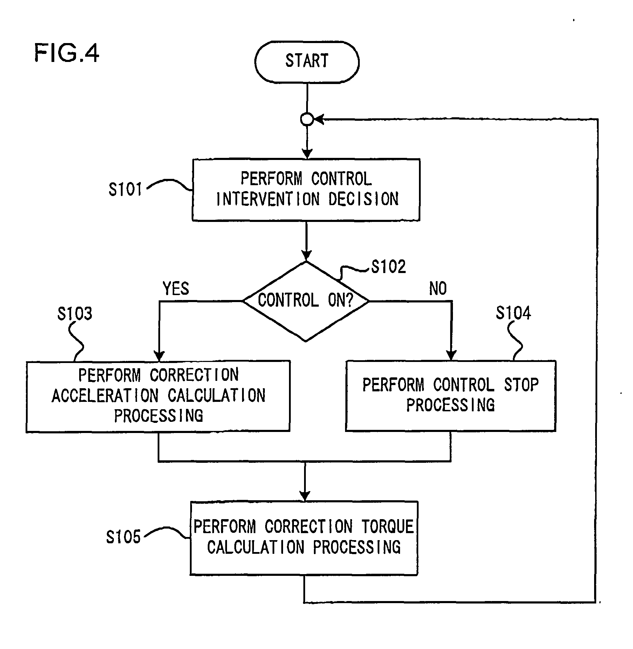

Fig. 4 is a flow chart for the overall braking/driving control. First, in a step S101, a control intervention decision is performed. The details of this control intervention decision will be described hereinafter. Then, in a step S102, the flow of control proceeds to a step S103 if control is ON (control intervention), while the flow of control is transferred to a step S104 if control is OFF. In the step S103 correction acceleration calculation processing that will be described hereinafter is performed and a correction acceleration $dG_{x\_r}$ is calculated, and then the flow of control proceeds to a step S105. On the other hand, in the step S104, the correction acceleration $dG_{x\_r}$ is gradually brought to zero by control stop processing, and then the flow of control is transferred to the step S105. In this step S105 correction torque calculation that will be described hereinafter is performed and the rear motor torque command value after correction is calculated, and the like.

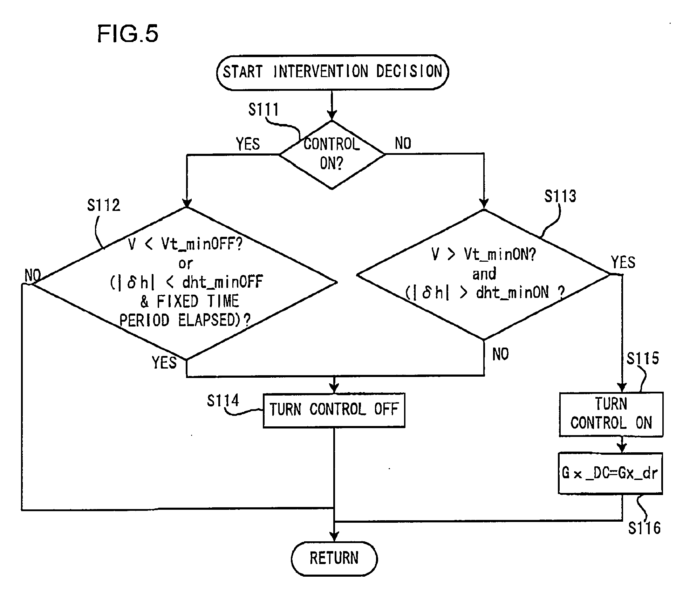

Fig. 5 is a flow chart showing the control intervention decision. First, in a step S111, a decision is made as to whether or not control is ON at the present, and if control is ON then the flow of control proceeds to a step S112, whereas if control is OFF then the flow of control is transferred to a step S113. In the step S112, if the vehicle speed V is less than a threshold value Vt_minOFF that is set in advance, or if a fixed time period that is set in advance elapses in the state in which the steering wheel angle $\delta_h$ is less than or equal to a threshold value tdh_minOFF that is set in advance, then the flow of control is transferred to a step S114. Here, it would also be acceptable to arrange to stop the control if a control stop command is received from externally, for example if the skidding prevention control device is operating and the skidding prevention control flag f_VDC_ON is raised. And in a step S113 the flow of control is transferred to a step S115 if the vehicle speed V is greater than a threshold value Vt_minON that is set in advance and moreover the steering wheel angle $\delta_h$ is greater than a threshold value tdh_minON that is set in advance, while in any other case the flow of control proceeds to a step S114. In this step S114, the control is turned OFF. On the other hand in the step S115 the control is turned ON, and the flow of control proceeds to a step S116, in which the current requested acceleration $G_{x\_t}$ is taken as a reference acceleration $G_{x\_DC}$.

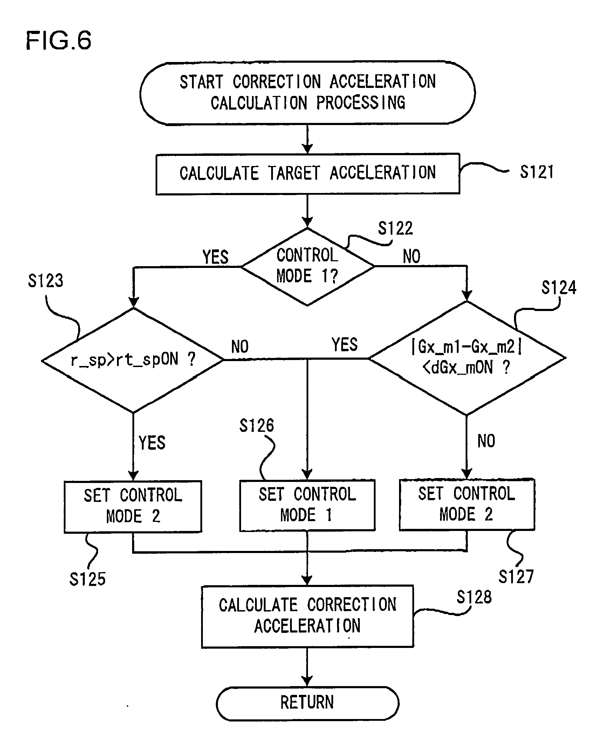

Fig. 6 is a flow chart showing the correction acceleration calculation processing. In a step S121, a first target acceleration $G_{x\_m1}$ and a second target acceleration $G_{x\_m2}$ are calculated using the following Equation (3) and Equation (4) respectively. The first target acceleration $G_{x\_m1}$ is negative and decelerates the vehicle (or reduces its acceleration) when the direction of the lateral jerk agrees with the direction of the lateral acceleration, and is an acceleration or a deceleration for promotion of cornering (yawing) . And the second target acceleration $G_{x\_m2}$ is positive and decelerates the vehicle (or reduces its acceleration) irrespective of the direction of the lateral jerk, and is an acceleration or a deceleration for damping cornering (yawing).

$$G_{x\_m1} = -\operatorname{sgn}\left(G_y\right)\frac{C_{xy}}{1+Ts}G_{y\_d} + G_{x\_DC} \qquad \cdots(3)$$

$$G_{x\_m2} = \frac{C_{xy}}{1+Ts}\left|G_{y\_d}\right| + G_{x\_DC} \qquad \cdots(4)$$

Here, $C_{xy}$ is the gain and T is a decay time constant, and these are set in advance. In a step S122, the flow of control proceeds to a step S123 if the current control mode is a control mode #1, and is transferred to a step S124 in any other case. In the step S123, if the spin bias value r_sp is greater than a threshold value tr_spON that is set in advance, then it is decided that the vehicle has a tendency to spin and the flow of control is transferred to a step S125, whereas otherwise the flow of control is transferred to a step S126. Here, this threshold value tr_spON is set to be smaller than the previously described threshold value tr_VDC_ON that is used by the brake controller. In the step S124, if the absolute value of the difference between the first target acceleration $G_{x\_m1}$ and the second target acceleration $G_{x\_m2}$ is less than or equal to a threshold value dGx_mON that is set in advance, then the flow of control is transferred to the step S126, whereas otherwise the flow of control proceeds to a step S127. In the steps S125 and S127 the control mode is set to a control mode #2, while in the step S126 the control mode is set to the control mode #1; and thereafter the flow of control proceeds to a step S128. In this step S128, if the control mode is the control mode #1, then the first target acceleration $G_{x\_m1}$ is taken as the target acceleration $G_{x\_m}$, whereas if the control mode is the control mode #2, then the second target acceleration $G_{x\_m2}$ is taken as the target acceleration $G_{x\_m}$. Thereafter, a target acceleration difference $dG_{x\_m}$ and a command acceleration difference $dG_{x\_t}$ are calculated using the following Equation (5) and Equation (6) respectively, and the correction acceleration $dG_{x\_r}$ is calculated using the following Equation (7) :

$$dG_{x\_m} = G_{x\_m} - G_{x\_DC} \qquad \cdots(5)$$

$$dG_{x\_t} = G_{x\_t} - G_{x\_DC} \qquad \cdots(6)$$

$$dG_{x\_r} = \begin{cases} \mathrm{sgn}(dG_{x\_t}) \times \max(|dG_{x\_t}|,|dG_{x\_m}|) - dG_{x\_t} & \text{(dGx\_t and dGx\_m have identical signs.)} \\ 0 & \text{(dGx\_t and dGx\_m have signs different from each other.)} \end{cases}$$

$$\cdots(7)$$

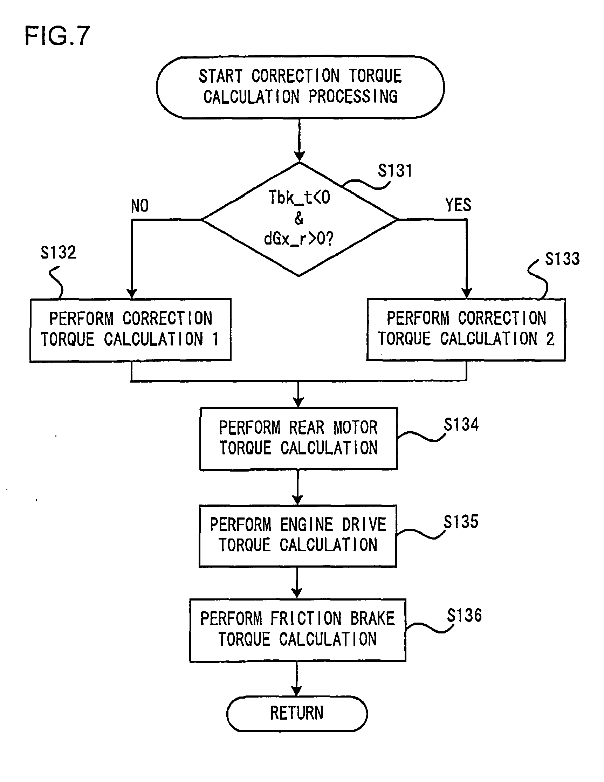

Fig. 7 is a flow chart showing the correction torque calculation processing. In a step S131, if the brake torque command value $T_{bk\_t}$ is negative and moreover the correction acceleration $dG_{x\_r}$ is positive, then the flow of control is transferred to a step S133, whereas in any other case the flow of control proceeds to a step S132. In the step S132 the motor torque correction value $dT_{mr\_r}$ is calculated using the following Equation (8), and then the flow of control is transferred to a step S134:

$$dT_{mr\_r} = mdG_{x\_r}R_t / R_{dr} \qquad \cdots(8)$$

Here $R_t$ is the radius of the vehicle wheels, and $R_{dr}$ is the rear differential gear ratio.
On the other hand, in the step S133, the motor torque correction value $dT_{mr\_r}$ is calculated using the following Equation (9), and then the flow of control proceeds to the step S134:

$$dT_{mr\_r} = \max(mdG_{x\_r}R_t + T_{bk\_t},0) / R_{dr} \qquad \cdots(9)$$

In the step S133, the motor torque command value after correction $T_{mr\_r}$ is calculated using the following Equation (10), and then the flow of control proceeds to the step S135 :

$$T_{mr\_r} = T_{mr\_t} + dT_{mr\_r} \qquad \cdots(10)$$

Here, it would also be acceptable to apply a limitation to the motor torque command value after correction $T_{mr\_r}$, so that this motor torque command value after correction $T_{mr\_r}$ does not exceed the range to which the output of the rear motor is limited.

In the step S135, an engine torque command value after correction $T_{ef\_r}$ is calculated using the following Equation (11), and then the flow of control proceeds to a step S136:

$$T_{ef\_r} = \max\left(T_{ef\_t} + mdG_{x\_r}R_t - dT_{mr\_r}R_{dr}, T_{ef\_\min}\right) \quad \cdots(11)$$

Here, $T_{ef\_t}$ is the engine drive torque command value, and $T_{ef\_min}$ is the engine drive torque minimum value. The engine drive torque minimum value $T_{ef\_min}$ is set in advance as a map with respect to the engine rotational speed.

In the step S136, a friction command value after correction $T_{bk\_r}$ is calculated using the following Equation (12):

$$T_{bk\_r} = \min\left\{T_{bk\_t} + mdG_{x\_r}R_t - dT_{mr\_r}R_{dr} - \left(T_{ef\_r} - T_{ef\_t}\right), 0\right\} \quad \cdots(12)$$

<An example of travel>

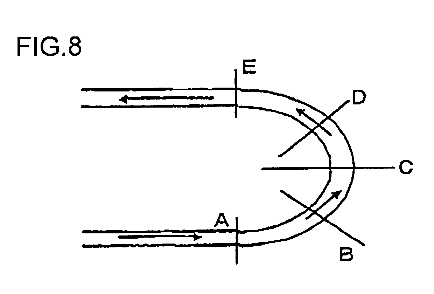

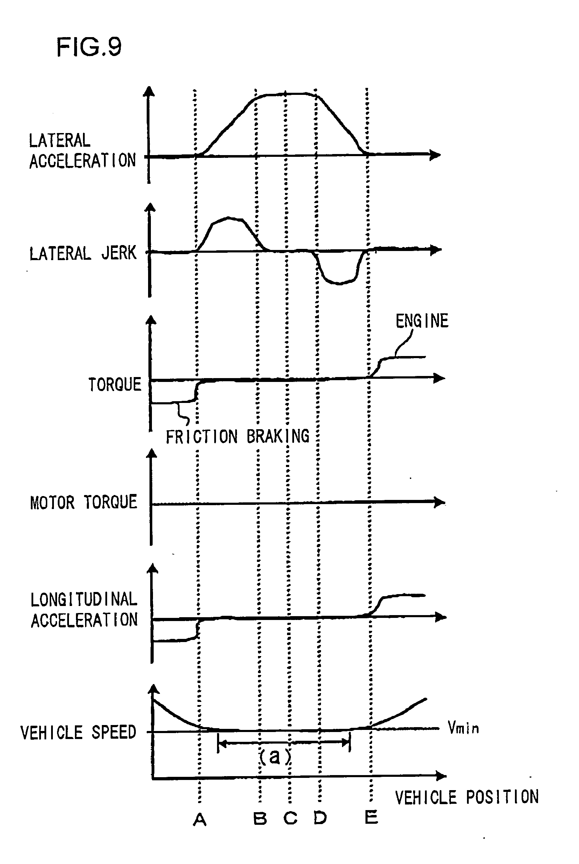

The course shown in Fig. 8, and examples of traveling in the direction from A to E, will now be explained using Figs. 9 through 11. In this course, a corner starts at the point A, the corner attains its tightest cornering (turning) radius at the point C, and the corner finishes at the point E.

Fig. 9 shows an example of the cornering (yawing) progression of a vehicle to which the automated cruise device of Japanese Laid-Open Patent Publication H07-125565 is applied.

This vehicle to which the automated cruise device of Japanese Laid-Open Patent Publication H07-125565 has been applied performs deceleration using the friction brakes until the point A, that is the starting point of the corner, and accelerates using the engine after having passed through the point E, that is the end point of the corner. In this case the vehicle speed is decreased more than necessary at the point A and the point E, since, before entering into the corner, the vehicle speed is controlled to Vmin in advance so as to be suitable for the point C at which the cornering radius is smallest, and accordingly there is a fear that the driver will undesirably suffer a feeling of insufficient speed, since the section (a) in which the vehicle speed becomes Vmin is quite long. Moreover, since deceleration is performed by using the friction brakes, accordingly the kinetic energy cannot be recouped, so that the fuel consumption is deteriorated.

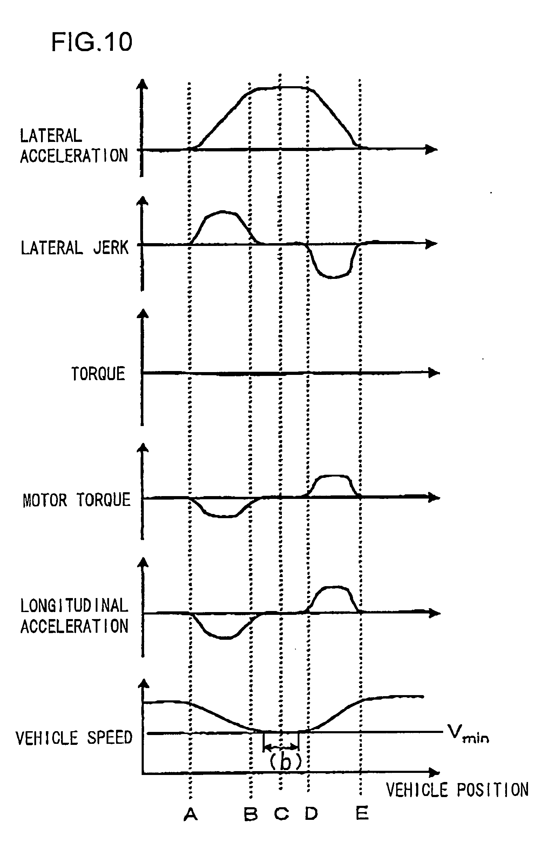

Fig. 10 shows an example of the cornering of a vehicle to which the drive force control device according to the present invention is applied.

This vehicle to which the drive force control device according to the present invention is applied performs deceleration with regenerative braking by the motor from the point A, that is the starting point of the corner, passes through the point C at which the cornering radius is the tightest at the vehicle speed Vmin, and performs acceleration by power running with the motor from the point D. In this case, since increase and decrease of the lateral acceleration Gy, in other words speed increase and decrease (regulation), is performed according to the change of cornering radius, accordingly it becomes possible not to decrease the vehicle speed more than necessary at the point A and the point E at which the cornering radius is large, while it becomes possible to decrease the vehicle speed as far as Vmin at the point C at which the cornering radius is small. In other words, since the section (b) at which the vehicle speed becomes Vmin is relatively short, accordingly no feeling of insufficient speed is imparted to the driver. Moreover, by decelerating when cornering starts, the cornering responsiveness of the vehicle is increased when the load that is imposed upon the front wheels is increased, and, by accelerating when the cornering ends, the cornering stability of the vehicle is increased when the load that is imposed upon the rear wheels is increased. Furthermore, since the deceleration is performed by regenerative braking with the motor so that the kinetic energy is temporarily converted into electrical energy, and since the acceleration is performed by power running with the motor so that the electrical energy is converted back into kinetic energy, accordingly there is little loss of energy, and deterioration of the fuel consumption is suppressed.

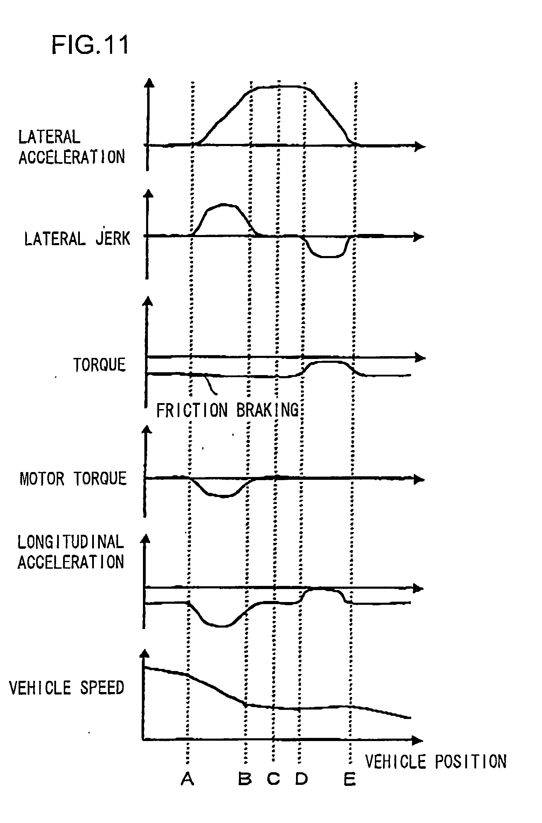

Fig. 11 shows an example of the case in which a vehicle to which the drive force control device according to the present invention is applied travels around a corner while decelerating.

In this case it is possible to prevent deterioration of the fuel consumption, since, from the point D to the point E, acceleration by power running by the motor is not performed, and the longitudinal acceleration of the vehicle is increased by releasing the friction brakes, so that application of the friction brakes and power running by the motor are not performed at the same time.

According to this embodiment as explained above, the driver does not experience any feeling of shortage of speed, and it is possible to control the motion of the vehicle in the longitudinal direction in coordination with the motion of the vehicle in the lateral direction in an appropriate manner for the state of motion of the vehicle. Moreover, it is possible to control the motion of the vehicle in the longitudinal direction in coordination with the motion of the vehicle in the lateral direction, while suppressing deterioration of the fuel consumption to the minimum possible level.

The above described embodiments are examples, and various modifications can be made without departing from the scope of the invention.

**Claims**

1. A braking/driving control apparatus, comprising:

   a lateral acceleration acquisition unit that acquires a lateral acceleration of a vehicle; and
   a longitudinal acceleration acquisition unit that acquires a longitudinal acceleration of the vehicle, wherein
   the longitudinal acceleration control unit controls a braking/driving force of the vehicle so that the longitudinal acceleration of the vehicle is decreased when the absolute value of the lateral acceleration of the vehicle that has been acquired tends to increase, and so that the longitudinal acceleration of the vehicle is increased when the absolute value of the lateral acceleration of the vehicle that has been acquired tends to decrease.

2. A braking/driving control apparatus according to Claim 1, further comprising:

   an electric motor that drives at least one wheel of the vehicle;
   an electrical power supply unit that supplies electrical power to the electric motor; and
   an electric storage device that is capable of accumulating the electrical power, wherein
   the longitudinal acceleration control unit causes the electric motor to perform power running or regenerative braking, so as to increase or decrease the longitudinal acceleration of the vehicle.

3. A braking/driving control apparatus according to Claim 2, further comprising:

   a friction braking device that applies frictional torque to at least one wheel of the vehicle, wherein
   power running of the electric motor is stopped when the friction braking device is applying frictional torque.

4. A braking/driving control apparatus according to Claim 1, further comprising:

   a steering angle acquisition unit that acquires steering angle information of the vehicle;
   a yaw rate acquisition unit that acquires a yaw rate of the vehicle; and
   a spin bias value calculation unit that calculates a spin bias value for the vehicle from the lateral acceleration, the steering angle information and the yaw rate, wherein
   the longitudinal acceleration control unit maintains or increases the longitudinal acceleration of the vehicle, if the spin bias value for the vehicle is between two threshold values tr_spON and tr_VDC_ON that are set in advance, and the absolute value of the lateral acceleration of the vehicle tends to increase.

5. A braking/driving control apparatus according to Claim 1, wherein
   the longitudinal acceleration control unit does not perform control to increase or decrease the longitudinal acceleration of the vehicle when deciding that lateral acceleration is not acting upon the vehicle based upon the lateral acceleration that has been acquired.

6. A braking/driving control apparatus according to Claim 1, wherein
   the longitudinal acceleration control unit starts to decelerate the vehicle when having decided that cornering of the vehicle has started based upon the lateral acceleration that has been acquired.

7. A vehicle, comprising a braking/driving control apparatus according to any one of Claims 1-6.

FIG.1

FIG.2

ENGINE ROTATIONAL SPEED →

TRANSMISSION GEAR RATIO →

ACCELERATOR PEDAL STEPPING UPON AMOUNT →

THROTTLE OPENING AMOUNT COMMAND ←

TRANSMISSION GEAR RATIO COMMAND ←

ENGINE CONTROLLER 80

ENGINE DRIVE TORQUE COMMAND VALUE AFTER CORRECTION ←

DRIVER REQUESTED ACCELERATION →

WHEEL SPEED →

LONGITUDINAL ACCELERATION →

LATERAL ACCELERATION →

YAW RATE →

BRAKE PEDAL STEPPING UPON AMOUNT →

STEERING WHEEL ANGLE →

CALIPER FORCE COMMAND ←

BRAKE CONTROLLER 90

WHEEL SPEED →

LATERAL ACCELERATION →

STEERING WHEEL ANGLE →

DRIVER REQUESTED DECELERATION →

SPIN BIAS VALUE →

FRICTION BRAKE TORQUE COMMAND VALUE AFTER CORRECTION ←

CENTRAL CONTROLLER 100

← BATTERY VOLTAGE

← CAPACITOR VOLTAGE

→ FRONT MOTOR CONTROL SIGNAL

→ REAR MOTOR CONTROL SIGNAL

→ INVERTER CONTROL SIGNAL

→ DC/DC CONVERTER CONTROL SIGNAL

→ POWER ON COMMAND

← POSITION INFORMATION FOR SUBJECT VEHICLE

← FORWARD AND REARWARD SENSOR INFORMATION

← TRAFFIC INFORMATION

← WEATHER INFORMATION

EP 2 050 642 A2

FIG.3

FIG.4

START

S101 — PERFORM CONTROL INTERVENTION DECISION

S102 — CONTROL ON?

YES

NO

S103 — PERFORM CORRECTION ACCELERATION CALCULATION PROCESSING

S104 — PERFORM CONTROL STOP PROCESSING

S105 — PERFORM CORRECTION TORQUE CALCULATION PROCESSING

# FIG.5

START INTERVENTION DECISION

S111

CONTROL ON?

YES

NO

S112

V < Vt_minOFF?
or
($|\delta h|$ < dht_minOFF
& FIXED TIME
PERIOD ELAPSED)?

NO

YES

S113

V > Vt_minON?
and
($|\delta h|$ > dht_minON ?

YES

NO

S115

TURN
CONTROL ON

S114

TURN CONTROL OFF

$Gx\_DC=Gx\_dr$

S116

RETURN

FIG.6

```
        ┌────────────────────────────────┐
        │  START CORRECTION ACCELERATION │
        │     CALCULATION PROCESSING     │
        └────────────────────────────────┘
                        │
                        ▼
        ┌────────────────────────────────┐
        │   CALCULATE TARGET ACCELERATION│ ─── S121
        └────────────────────────────────┘
                        │
                        ▼
                      S122
         YES      ◇ CONTROL ◇     NO
    ┌──────────── MODE 1? ─────────────┐
    │              ◇    ◇               │
    ▼                                   ▼
  S123                                S124
 ◇         ◇         NO      YES    ◇            ◇
◇ r_sp>rt_spON ? ◇ ─────────────── ◇ |Gx_m1-Gx_m2| ◇
 ◇         ◇                         ◇  <dGx_mON ?  ◇
    │                                   │
   YES          S126                   NO
    ▼            ▼                      ▼
┌──────────┐ ┌──────────┐        ┌──────────┐
│SET CONTROL│ │SET CONTROL│        │SET CONTROL│
│  MODE 2  │ │  MODE 1  │        │  MODE 2  │
└──────────┘ └──────────┘        └──────────┘
      │            │                   │
    S125           │                 S127
      └────────────┼───────────────────┘
                   ▼
        ┌────────────────────────┐
        │  CALCULATE CORRECTION  │ ── S128
        │      ACCELERATION      │
        └────────────────────────┘
                   │
                   ▼
             ┌──────────┐
             │  RETURN  │
             └──────────┘
```

FIG.7

```
          ┌─────────────────────────────┐
          │  START CORRECTION TORQUE    │
          │  CALCULATION PROCESSING     │
          └─────────────────────────────┘
                         │
                         ▼
                                        S131
                    ╱──────────────╲
                   ╱    Tbk_t<0      ╲
         NO       ╱        &          ╲      YES
    ┌───────────╱       dGx_r>0?       ╲───────────┐
    │           ╲                     ╱            │
    ▼            ╲──────────────────╱             ▼
  S132                                          S133
┌──────────────────────┐              ┌──────────────────────┐
│  PERFORM CORRECTION  │              │  PERFORM CORRECTION  │
│ TORQUE CALCULATION 1 │              │ TORQUE CALCULATION 2 │
└──────────────────────┘              └──────────────────────┘
           │                                     │
           └──────────────┬──────────────────────┘
                          ▼
              ┌──────────────────────┐
              │  PERFORM REAR MOTOR  │   S134
              │  TORQUE CALCULATION  │
              └──────────────────────┘
                          │
                          ▼
              ┌──────────────────────┐
              │ PERFORM ENGINE DRIVE │   S135
              │  TORQUE CALCULATION  │
              └──────────────────────┘
                          │
                          ▼
              ┌──────────────────────┐
              │PERFORM FRICTION BRAKE│   S136
              │  TORQUE CALCULATION  │
              └──────────────────────┘
                          │
                          ▼
                    ┌───────────┐
                    │  RETURN   │
                    └───────────┘
```

16

FIG.8

## FIG.9

LATERAL
ACCELERATION

LATERAL JERK

TORQUE

ENGINE

FRICTION BRAKING

MOTOR TORQUE

LONGITUDINAL
ACCELERATION

VEHICLE SPEED

Vmin

(a)

A  B  C  D  E

VEHICLE POSITION

# FIG.10

LATERAL ACCELERATION

LATERAL JERK

TORQUE

MOTOR TORQUE

LONGITUDINAL ACCELERATION

VEHICLE SPEED

$V_{min}$

(b)

VEHICLE POSITION

A  B  C  D  E

# FIG.11

LATERAL
ACCELERATION

LATERAL JERK

TORQUE

FRICTION BRAKING

MOTOR TORQUE

LONGITUDINAL
ACCELERATION

VEHICLE SPEED

VEHICLE POSITION

A　B　C　D　E

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007268499 A
- JP 2008234158 A

- JP H07125565 B